# EUROPEAN PATENT SPECIFICATION

(11) **EP 1 026 009 B1**
(45) Date of publication and mention of the grant of the patent: **17.09.2003**
(21) Application number: 99830048.7
(22) Date of filing: 02.02.1999
(51) Int. Cl.: B60B 17/00

(54) **Soundproof Wheel**
Schallgedämpftes Rad
Roue insonorisée

(43) Date of publication of application: 09.08.2000
(73) Proprietor: Lucchini Sidermeccanica S.p.A., 25127 Brescia (IT)
(72) Inventor: Cervello, Steven, 25084 Gargnano (BS) (IT)
(74) Representative: Lecce, Giovanni

(56) References cited:
- EP-A- 0 290 759
- EP-A- 0 872 358
- DE-A- 2 709 895
- US-A- 3 843 188
- PATENT ABSTRACTS OF JAPAN vol. 010, no. 155 (M-485), 4 June 1986 & JP 61 010140 A (ORION KIKAI KK), 17 January 1986

## Description

The present invention relates to a soundproof wheel.

More particularly, the present invention relates to a soundproof wheel which has a specific use on rolling stocks whose wheel are of the non-block-braked type, including tramway or urban vehicles.

As is known, the wheels of which rail-rolling means are provided have, due to their specific utilisation, high noise characteristics, caused basically by the systematic contact with the rail.

The wheel is the main element of the noise produced by a train, as it has a wide radiating surface and at the same time an extremely reduced damping.

In order to obviate this drawback, several soundproofing systems have been designed for the wheels that equip rail-rolling vehicles: however, such systems have severe drawbacks.

A known solution uses packs of metal foils alternated to foils of viscoelastic material. Metal foils have different thicknesses so as to vibrate at different frequencies and to cover the frequency range of wheel's resonance; the deformation of the viscoelastic material involves the dissipation of the vibration energy in the form of heat. This solution of foil packs requires a mechanical assembly on the wheel, through screws or bolts; the same wheel, according to the assembly position which may concern the central plate or the rolling belt, involves consequently a change in its usual geometry, as it must be provided with holes or grooves. These operations cause as a whole a marked weight increase for each individual wheel, of the order 35-45 kg. Besides, each wheel is provided with a high number of metal foils and viscoelastic foils, and each of them requires for its assembly 2 to 4 screws or bolts; therefore, this solution is complex and little practical, not least because the viscoelastic material employed remains exposed, i.e. in touch with atmospheric agents and the light, which cause in the time the deterioration of their mechanical properties.

Also from the safety point of view this known solution has drawbacks, as the screws or bolts than lock the foil packs can accidentally loosen or break; such possibility must betaken concretely into consideration, in view of the high stresses and vibrations which the wheel as a whole is subjected to.

Another known solution utilised for the dampening of the noise of rail-rolling vehicles uses one or more metal rings fitted under the rolling belt of said wheels; said rings tend to dissipate the vibration energy through the friction that generates between the same rings and the surface of the wheel cavity. The ring or rings are made from a measure-calendered rod steel, welded at the ends and inserted in said cavity. The effectiveness of such solution, complex in itself, is strictly connected to the quality of the contact between the ring or rings and the cavity, which can be modified by the building up of powders or grease and affected by the pressure, difficult to be controlled during the assembly, when the ring is fitted in the fixed seat.

The overall increase in the wheel weight, lower though it is with respect to the preceding solution, is marked also in this case, being comprised in general between 10 and 15 kg.

Object of the present invention is to obviate the above drawbacks.

More particularly, object of this invention is to realise a soundproof wheel, to be used especially for rolling stock equipped with non-block-brake wheels, and comprising tramway or urban vehicles, suitably to substantially reduce sound emissions caused during its use by the contact with the rail.

A further object of the invention is to realise a soundproof wheel such as not to require structural changes in the usual geometry of the wheels traditionally used in this sector.

Another object of the invention is to realise a soundproof wheel having an extremely contained weight as concerns the additional means used for said substantial reduction in sound emissions.

A further object is to provide users with a soundproof wheel such as to ensure a high level of resistance and reliability in the time, and also such as to be easily and economically realised.

These objects are achieved by the soundproof wheel of claim 1.

A soundproof wheel for railway, tramway or urban vehicle according to the preamble of claim 1 is known from EP-A-0 872 358. The soundproof wheel disclosed by this reference comprises a hub circumscribing a through-hole, a peripheral ring extended on the inner front into a shaped edge and a central plate, lowered and shaped, connected to said hub and said ring by arched parts; said plate having on at least one front a pressure-applied composite covering made by a viscoelastic layer to which a metal membrane is superposed, said covering being fixed to the shaped surface which defines said front(s) of plate.

Such a soundproof wheel is also known from JP-A-61 010140.

The soundproof wheel of the present invention is characterised in that the viscoelastic layer is a foamed material constituted by an acrylic foam.

Preferably, the acrylic foam is in the form of a strip adhesive on both sides.

The application area of said metal membrane extends not only on the straight or flat part of the central plate of the wheel, but also on the connection part between said central plate and the rolling belt. Considering the resonance frequencies of a railway wheel having a rather thin central plate and a more massive hub, and the modal forms according to which said wheel deforms dynamically and cyclically at each of the resonance frequencies, one observes that the production of sound waves by the wheel depends on such very forms and in particular by the speed at which its surface in contact with the air vibrates in the normal direction, causing in said air sound pressure waves which the human ear can hear if the frequency is comprised between 20Hz and 20 kHz. The reduction in sound emissions takes place by increasing the structural dampening, i.e. by increasing the energy dissipated at each deformation cycle of the wheel. Steel has an essentially null dampening, while viscoelastic materials have a very high dampening.

The dampening increase takes place when the dynamic-cyclic strain of the wheel causes a sufficient dynamic-cyclic strain in the viscoelastic material; the dampening system is the more effective, the nearer it is to the wheel area where the surface deforms the most.

Even though the modal forms are different from each other and even though each has an increase in the geometrical complication on the increase in frequency, it is possible to identify two families of a same form, which substantially include all of the basic ones which cause noises; in some forms of a first type, both the rolling belt and the central plate deform, while in other ones the deformation only concerns the rolling belt. In this second case, the dampening cannot happen if the dampening treatment concerns only the straight part of the central plate of the wheel, which will continue to produce noise, while the first type forms would be dampened only partly. For both these modal families, the connection area between the central plate and the rolling belt is that where the dynamic-cyclic strain of the wheel is concentrated most, and its covering, according to the tests carried out by the applicant, gives rise to an optimum dampening of all modal forms.

The application of a covering limited to the straight part of the central plate would involve a de-coupling of the modal forms of the first type; because of the greater mass and size of the belt with respect to the central plate, the same belt would continue to vibrate independently on the attenuation of the vibrations on the central plate.

The constructive and functional characteristics of the soundproof wheel of the present invention will be better understood thanks to the following description, wherein reference is made to the drawings attached herewith which represent a preferred, non limiting, preferred embodiment of the same, and wherein:
Figure 1 schematically shows a partial longitudinal section of the soundproof wheel of the present invention;
Figure 2 schematically shows an enlargement of the wheel of Figure 1 in the internal part of connection between the central plate and the rolling belt of said wheel;
Figure 3 schematically shows an enlargement of the wheel of Figure 1 in the external part of connection between the central plate and the rolling belt of said wheel;
Figure 4 schematically shows an enlargement of the wheel of Figure 1 in the central-upper part of the central plate of said wheel.

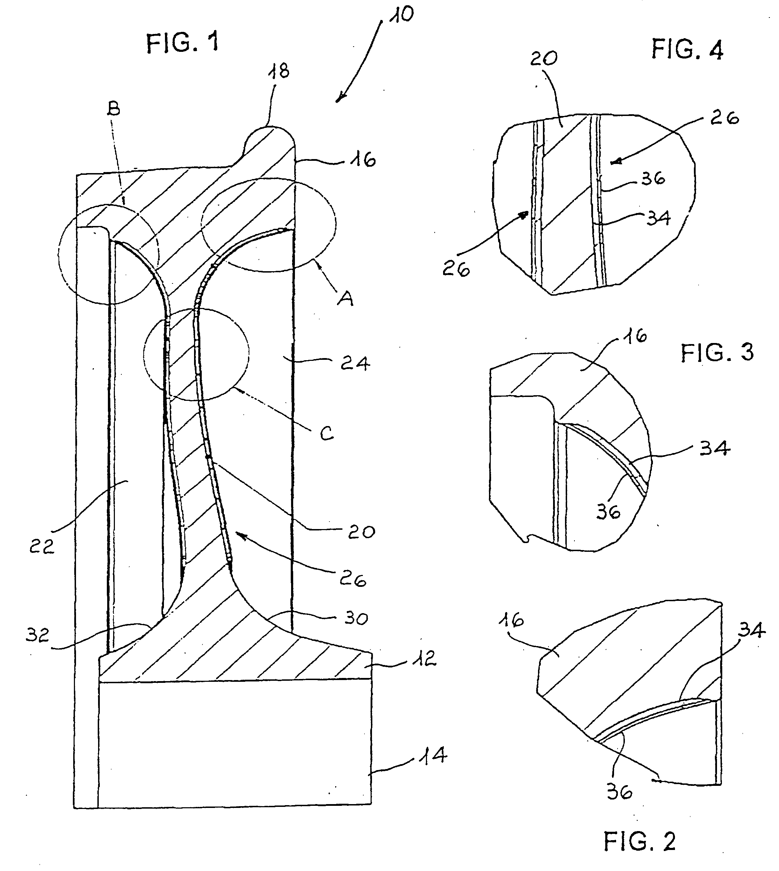

With starting reference to Figure 1, the soundproof wheel of the present invention, indicated as a whole by 10 in Figure 1 which represents a partial longitudinal section of the same, conventionally comprises a hub 12 which circumscribes a central through-hole 14, a peripheral ring 16 extended on the inner side into a shaped edge 18 performing the function of guide along the rail (not represented) and a lowered and shaped central part 20. having a mixtilinear development, forming the plate, connected to said hub 12 and said ring 16. Said plate 20 has a thickness markedly lower than hub 12 and the peripheral ring 16, defining circular crowns 22, 24.

According to the invention, a composite covering 26, formed by a viscoelastic layer and a metal membrane, is applied along the internal and/or external side(s) of the plate 20 of wheel 10 up to the area of connection with the rolling belt, circumscribed by ring 16; in the opposite area, covering 26 extends along plate 20 up to near the internal 30 and external 32 arched part of connection with hub 12.

The viscoelastic layer of covering 26, indicated by 34, is placed in touch with plate 20 of wheel 10, while the metal membrane which completes said covering, indicated by 36, covers said layer 34 and is exposed.

The viscoelastic layer 34 is constituted by an acrylic foam adhesive on both sides of a limited thickness, constituted, by way of example, of a material adhesive on both sides of the type known by the name of VHB 4950 produced by 3M.

Preferably, the metal membrane 36 is obtained from aluminium or steel of uniform thickness, comprised by way of example between 1.0 and 2.0 mm.

The acrylic foam adhesive on both sides forming the viscoelastic layer 34 has the form of a strip of suitable height which is ring-shaped to cover one or both sides of plate 20 and the connection area between said plate and the rolling belt circumscribed by ring 16.

Said layer is preferably tackified by rolling to foil sheets from which the metal membrane 36 is obtained; the so formed panel is then die cut and pre-shaped according to the form of the central plate and pressure-applied to the wheel.

In the embodiment of the figures, covering 26 constituted by the viscoelastic layer 34 and the metal membrane 36 is applied, by way of example, both to the internal and the external sides of the plate 20; it is however to be understood that the same covering 26 may be applied to one only of said sides of the plate 20.

Depending on the material used for membrane 36, for instance aluminium or steel, the overall weight of covering 26 of each individual front of plate 20 is approximately comprised between 1.7 and 4.0 kg.

In the so formed covering 26, the viscoelastic layer 34 applied to the surface of the vibrating structure, i.e. the plate 20 of the wheel 10, is covered by a metal membrane 36, in such a way as to increase the so-called shear strain, which takes place in the same layer 34 following the dynamic-cyclic strain of the vibrating surface; this causes an increase in the dissipation of vibration energy in the form of heat and therefore an increase in the structural dampening. The experimental laboratory tests carried out on wheels 10 provided with covering 26 on both sides of the plate have stressed a remarkable reduction in sound emissions with respect to usual wheels devoid of soundproofing means; in particular in the frequency band comprised between 2 and 6 kHz, which is considered to be the band wherein the noise of the wheel prevails on the noise caused by other components such as the rail, said tests have permitted to ascertain a reduction by over 20 dB for the dominating peaks.

As can be inferred from the above, the advantages achieved by the invention are evident.

The soundproof wheel of the present invention, especially utilisable on rolling stock with wheels of the non-block-braked type, including tramway or urban vehicles, allows to substantially reduce sound emissions thanks to the composite covering 27 of which at least one of the fronts of the plate 20 is provided.

Particularly advantageous is the possibility of applying said covering 26 on one front or both sides of the plate 20, with no need of modifying the usual geometry of the wheels; the same covering 26, which does not require mechanical assemblies, has, besides, a very contained weight and is not subjected to deterioration due to atmospheric agents, as it exposed part is constituted by an inalterable metal membrane.

Although the present invention has been hereinbefore described with reference to a preferred, illustrative but not limitative embodiment, alternatives and variations are possible within the scope of the appended claims.

## Claims

1. A soundproof wheel (10) for railway, tramway or urban vehicle, comprising a hub (12) circumscribing a through-hole (14), a peripheral ring (16) extended on the inner side into a shaped edge (18) and a central plate (20), having a thickness lower than that of said hub (12) and said ring (16) and being connected to said hub (12) and said ring (16) by arched parts; said plate (20) having along its internal and/or external side a pressure-applied composite covering (26) made by a viscoelastic layer (34) to which a metal membrane (36) is superposed, said covering (26) being fixed to the shaped surface which defines said side (s) of the central plate (20);
**characterised in that** said viscoelastic layer (34) is a foamed material constituted by an acrylic foam.

2. The soundproof wheel according to claim 1, **characterised in that** the acrylic foam is in the form of a strip adhesive on both sides.

3. The soundproof wheel according to claim 1 or 2, **characterised in that** the viscoelastic layer (34) is a continuous strip developed in the form of a circular crown.

4. The soundproof wheel according to anyone of the preceding claims, **characterised in that** the covering (26) extends up to the area of connection with the rolling belt circumscribed by the ring (16), and, in the opposite area, up to near the arched part (30, 32) of connection with the hub (12).

## Patentansprüche

1. Schallgedämpftes Rad (10) für eine Eisenbahn, Straßenbahn oder ein städtisches Fahrzeug, umfassend eine Nabe (12), die ein Durchgangsloch (14) begrenzt, einen Umfangsring (16) der sich auf der Innenseite in eine geformte Kante (18) erstreckt und eine zentrale Platte (20), die eine niedrigere Dicke als die der Nabe (12) und des Ringes (16) aufweist und mit der Nabe (12) und dem Ring (16) durch gekrümmte Teile verbunden ist; wobei die Platte (20) entlang ihrer inneren und/oder äußeren Seite eine mittels Druck angebrachte zusammengesetzte Beschichtung (26) aufweist, die durch eine viskoelastische Schicht (34) hergestellt ist, auf welche eine Metallmembrane (36) aufgelegt ist, wobei die Beschichtung (26) an der geformten Oberfläche befestigt ist, welche die Seite (n) der zentralen Platte (20) festlegt;
**dadurch gekennzeichnet, dass** die viskoelastische Schicht (34) ein geschäumtes Material ist, das durch einen Acrylschaum gebildet ist.

2. Schallgedämpftes Rad gemäß Anspruch 1, **dadurch gekennzeichnet, dass** der Acrylschaum in Form eines beidseitig klebendes Streifens ist.

3. Schallgedäropftes Rad gemäß Anspruch 1 oder 2, **dadurch gekennzeichnet, dass** die viskoelasrische Schicht (34) ein kontinuierlicher Streifen ist, der in Form eines ringförmigen Kranzes entwickelt ist.

4. Schallgedämpftes Rad gemäß einem der vorhergehenden Ansprüche, **dadurch gekennzeichnet, dass** die Beschichtung (26) sich bis zu einem Verbindungsbereich mit der Wälzmanschette erstreckt, die durch den Ring (16) begrenzt ist und in dem entgegengesetzten Bereich sich bis in die Nähe des gekrümmten Teiles (30, 32) einer verbindung mit der Nabe (12) erstreckt.

## Revendications

1. Roue insonorisée (10) pour véhicule de chemin de fer, de tramway ou urbain, comportant un moyeu (12) entourant un trou traversant (14), une jante périphérique (16) se prolongeant sur le côté intérieur par un mentonnet (18) mis en forme, et une plaque centrale (20) ayant une épaisseur inférieure à celle dudit moyeu (12) et de ladite jante (16) et étant reliée audit moyeu (12) et à ladite jante (16) par des parties cambrées ; ladite plaque (20) ayant, le long de son côté intérieur et/ou extérieur, un revêtement composite (26) appliqué sous pression formé d'une couche visco-élastique (34) à laquelle une membrane métallique (36) est superposée, ledit revêtement (26) étant fixé à la surface mise en forme qui définit ledit côté ou lesdits côtés de la plaque centrale (20) ;
**caractérisée en ce que** ladite couche visco-élastique (34) est en une matière à l'état de mousse constituée d'une mousse acrylique.

2. Roue insonorisée selon la revendication 1, **caractérisée en ce que** la mousse acrylique se présente sous la forme d'une bande dont les deux côtés sont adhésifs.

3. Roue insonorisée selon la revendication 1 ou 2, **caractérisée en ce que** la couche visco-élastique (34) est une bande continue développée sous la forme d'une couronne circulaire.

4. Roue insonorisée selon l'une quelconque des revendications précédentes, **caractérisée en ce que** le revêtement (26) s'étend jusqu'à la zone de raccordement avec la ceinture de roulement circonscrite par la jante (16) et, dans la zone opposée, jusqu'au voisinage de la partie cambrée (30, 32) de raccordement avec le moyeu (12).
